# EUROPEAN PATENT APPLICATION

(11) **EP 2 270 654 A2**
(43) Date of publication of application: **05.01.2011**
(21) Application number: 10162595.2
(22) Date of filing: 11.05.2010
(51) Int. Cl.: G06F 9/44

(54) **Programmable personal infotainment system**

(30) Priority: 30.06.2009 TW 098122094
(71) Applicant: Accton Technology Corporation, Science-based Industrial Park 300 Hsinchu (TW)
(72) Inventor: Chen, Jeng-Chun, 10653, Taipei City (TW); Chen, Meng-Cheng, 11656, Taipei City (TW); Syu, Wei-Hao, 10664, Taipei City (TW)
(74) Representative: Lang, Christian

(57) **Abstract**

The present invention discloses a system, which can be used to run one or more widgets randomly at specific schedule according to user preference. The system, in one of the embodiments, comprises, a memory, for storing one or more of the widgets and an inputted schedule according to the user instruction; a user interface, for providing the users to input the schedule; a LCD, for displaying the contents of the widgets; a random program selector, for searching the appointed widgets during a specific time frame according to the schedule; a processing unit, for accessing a specific content from a server according to the appointed widgets; and a player, for playing the specific content according to the selecting result of the random program selector.

## Description

### BACKGROUND OF THE INVENTION

### 1. Field of the invention

The present invention relates to a programmable personal infotainment system, more particularly, to a programmable personal infotainment system for randomly or sequentially displaying one or a plurality of interface widgets according to user preferences at a specific time interval.

### 2. Description of the Prior Arts

Conventionally, in a multichannel system of ordinary multi-media, a plurality of displaying means, such as TVs, computer displays, rejection apparatus, optic-electronic display monitor, or the like, is usually installed at different spots / stores, and each of aforesaid display means can play various multi-media such as performance shows, news, advertisement, lecturing lessons... etc. Particularly, this sort of system is suitable for the application of the indoor advertising system, public information system, or electronic advertisement board. In the systems, each of the display means can be treated as a channel, and for each of the channel, the system management center can set the showing-up sequence for different playing programs with respect to every channel so that each channel plays the predetermined multi-media content at pre-determined time based upon the showing-up sequence, hence, the showing-up sequence for each corresponding multimedia content can be executed at a specific timing or upon demands. Therefore, the playing of multimedia can have more varieties, suit local circumstance, and further meet the demands of different locations / stores.

However, when the numbers of the channels are increased, respectively setting the showing-up sequence for the playing programs with respect to each channel became a tedious job, and a lot of time and human resources will be spent. Particularly, in the digital channel, how to quickly and conveniently set up the showing-up sequence for individual playing program with respect to many channels became a very important goal. In conventional arts, the most adopted approach is to set several channels as a group, and a plurality of channels belonging to the same group uses the same playing program. Even though the conventional approach can greatly simplify the manager's task, it lacks flexibility and variation tolerably and is unable to satisfy the demand adaptive to local circumstances since the playing schedules of all of the channels in the same group are completely the same, consequently, the original advantage and feature of the conventional multichannel is greatly reduced.

Accordingly, in view of the above drawbacks, it is an imperative that a programmable personal infotainment system is designed according to user preference to randomly or sequentially display one or a plurality of widgets so as to play the multimedia content and solve the foregoing drawbacks.

### SUMMARY OF THE INVENTION

In view of the disadvantages of prior art, the primary object of the present invention relates to a schedule setting system to automatically and randomly produce playing lists by allowing users to set one or more interface widgets of a plurality of groups such that the setting of a program's execution time sequence can be more flexible, convenient, and efficient to vary the playing contents.

The present invention relates to a programmable personal infotainment system, which can randomly play one or plural widgets at a specific time interval according to user preferences, comprising: a memory, for storing one or plural widgets and an execution time sequence for the interface widgets according to the user preference; a user interface, for assisting the user to input the execution time sequence; a liquid display, for displaying contents of the interface widgets; a random program selector, for searching the interface widget designated at the execution time sequence within a specified time frame; a processing unit, for accessing a specific content from a server according to the designated widget; and a player, for playing the specific content according to the outcome selected by the random program selector.

The present invention further relates to a computer-readable medium, for storing a computer program which is loaded into a computer that enacts the computer to execute managing a plurality of interface widgets, the computer program is operable to the steps of:
(a) receiving an executing sequence inputted by user for executing a plurality of interface widgets;
(b) checking whether or not the interface widgets executed within a specific time interval exceed more than one with respect to the executing sequence; and
(c) randomly selecting one of the more-than-one interface widgets needed for execution, if the interface widgets executed within the specific time interval exceed more than one.

The secondary purpose of the present invention is for providing a method for programming personal infotainment, and the method is loaded onto a personal infotainment system having program codes to manage one or more than one interface widgets corresponding to a infotainment content, the method comprises the steps of: (a) selecting a needed interface widget via a user interface, and setting up an executing sequence for the needed interface widget; (b) calling the interface widget with respect to the executing sequence set up via a kernel unit so as to collect at least an infotainment content from an infotainment service terminal; and (c) randomly or sequentially displaying any one of the interface widgets operated in the executing sequence in a media replay module to correspondingly display the infotainment content.

Preferably, the media replay module is a liquid crystal display; preferably, the user interface is a touch panel or a remote controller; preferably, the kernel unit is a processing module capable for both Internet linking and media content processing; preferably, the interface widget is a storage medium stored in a system as default, and the storage medium is composed of a memory; and preferably, while the number of the operated interface widget exceeds the executing sequence that is originally set, the interface widget is terminated from the display of the medium replay module.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become readily understood from the detailed description given herein below and the accompanying drawings which are given by way of illustration only, and thus are not limitative of the present invention and wherein:

FIG. 1 relates to a preferred embodiment according to the present invention;

FIG. 2 is an program executing sequence of a preferred embodiment according to the present invention;

FIG. 3 is a sport program of the executing sequence of a preferred embodiment according to the present invention; and

FIG. 4 relates to a computer-readable medium of the present invention.

### DESCRIPTION OF THE EXEMPLARY EMBODIMENTS

The following descriptions are of exemplary embodiments only, and are not intended to limit the scope, applicability, or configuration of the invention in any way. Rather, the following description provides a convenient illustration for implementing exemplary embodiments of the invention. Various changes to the described embodiments may be made in the function and arrangement of the elements described. For your esteemed members of reviewing committee to further understand and recognize the fulfilled functions and structural characteristics of the invention, several exemplary embodiments cooperating with detailed description are presented as the follows.

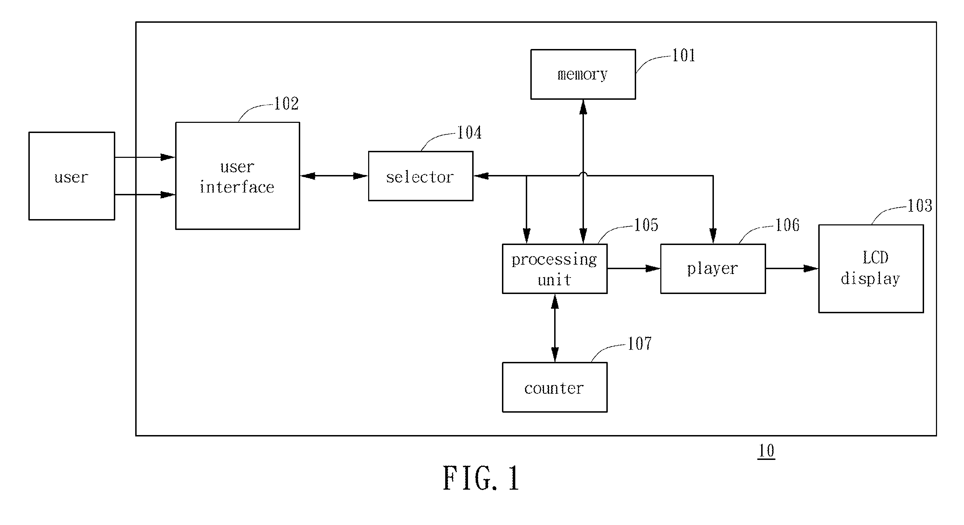

Please refer to Fig. 1, which illustrates a preferred embodiment of the present invention, namely, an programmable personal infotainment system 10, which can randomly play one or plural widgets at a specific time interval according to user's preferences, comprising: a memory 101, for storing one or plural widgets and an execution time sequence according to user preferences in regard to the widgets; a user interface 102, for assisting the user to input the execution time sequence; a liquid crystal display 103, for displaying contents of the interface widgets; a random program selector 104, for searching the interface widget, designated at the execution time sequence, within a specified time frame; a processing unit 105, for accessing a specific content from a server according to the designated widget; and a player 106, for playing the specific content according to the outcome selected by the random program selector 104.

Preferably, the executing sequence of the program comprises a program name and a predetermined program play schedule.

Preferably, the programmable personal infotainment system 10 further comprises a counter 107, for calculating a playing time of a playing program of the program execution sequence.

Preferably, the propagation scheme of the program's executing sequence is set up via a web page.

Preferably, the executing sequence of the program is an on-line TV program guideline.

Preferably, the random program selector 104 selects a web site.

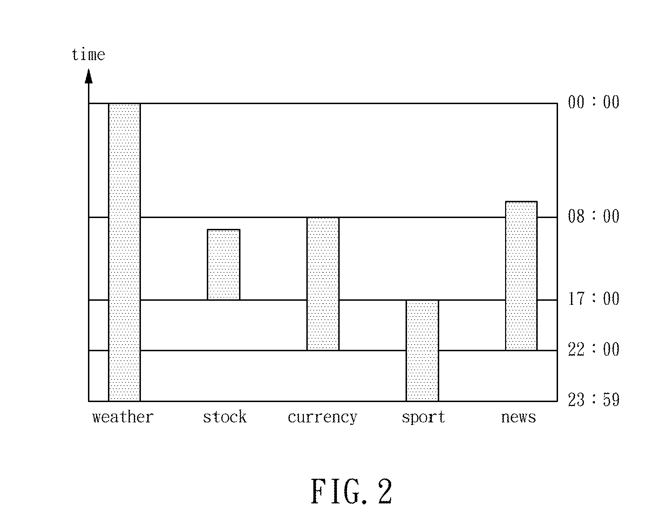

Please refer to Fig. 2, which illustrates an embodiment of executing sequence of the present invention. For instance, in 24 hours a day, via the user interface 102, an user can input the executing sequence for the five programs such as weather, stock exchange, currency, sport and news, where the execution sequence for the weather program is all day long; the one (program) for stock exchange is between 8:00 and 17:00; the one for the currency is between 08:00 and 22:00, the one for sport is between 17:00 and 23:59; and the one for news is between 07:55 and 22:00.

In the present embodiment, between 00:00 and 07:55, only the weather widget is executed. That is to say, the random program selector 104 enacts only the widget(s) correlated with weather which selects the weather-related program or websites. During 07:55 to 08:00, when the execution sequence of the news program joins, the selector 104 enacts the executing sequence for both weather and news relates widgets to select weather correlated and news correlated programs and websites such that the processing unit 105 can access a corresponding specific content of the weather / news executing sequence from a server according to the assigned widgets. In the same manner, between 08:00 and 17:00, the selector 104 selects only widgets which are for the programs/websites-correlated with the weather / stock exchange / currency / news execution sequence such that the processing unit 105 can access a corresponding designated content of the weather / stock exchange / currency / news execution sequence from a server according to the designated widgets. In the same manner, between 17:00 and 22:00, the selector 104 selects only widgets for the programs and websites correlated with the weather / sport / currency / news execution sequence and removes the widget correlated with stock execution sequence such that the processing unit 105 can access a corresponding specific content of the weather / sport / currency / news programs executing sequence from the server according to the designated widgets. In the same manner, during 22:00∼23:59, the selector 104 selects only widgets which are for the programs and websites correlated with the weather and sport execution sequence and removes the widget correlated with currency and news program execution sequences such that the 105 can access a corresponding designated content of the weather and sport programs execution sequence from the server according to the designated widgets.

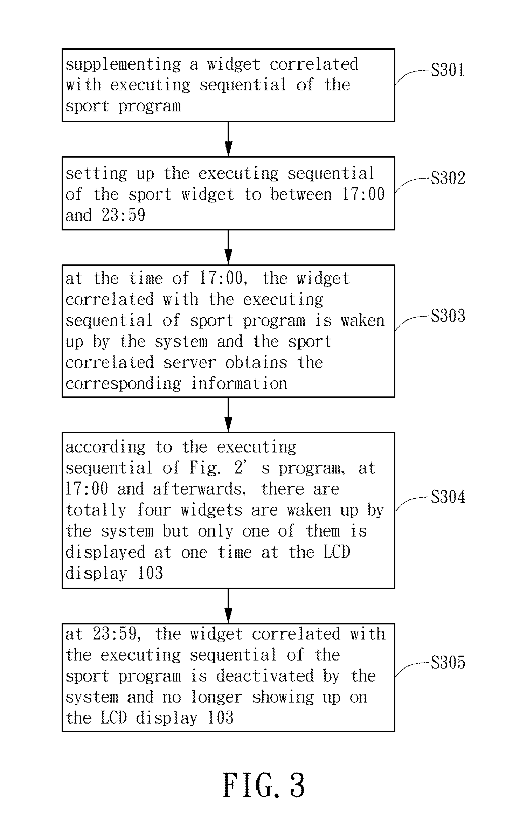

Fig. 3 relates to a flow chart of corresponding embodiments for executing sequence of the sport program. For instance, S301: supplementing a widget correlated with executing sequence of the sport program; S302: setting up the executing sequence of the sport widget to between 17:00 and 23:59; S303: at the time of 17:00, the widget correlated with the executing sequence of sport program is waken up by the system and the sport correlated server obtains the corresponding information; S304: according to the executing sequence of Fig. 2's program, at 17:00 and afterwards, there are totally four widgets waken up by the system but only one of them is displayed at one time at the LCD display 103; S305: at 23:59, the widget correlated with the executing sequence of the sport program is deactivated by the system and no longer showing up on the LCD display 103.

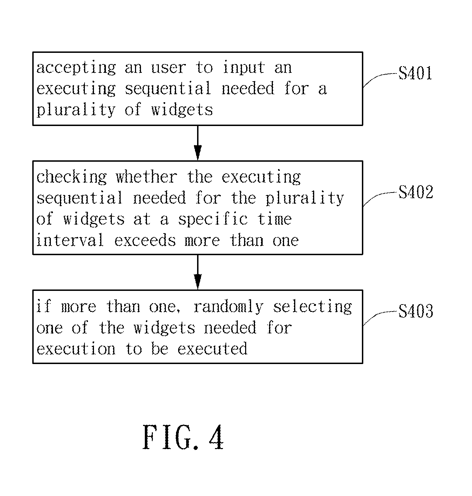

Furthermore, please refer to Fig. 4, which illustrates a computer-readable medium of the present invention, for storing a computer program which is loaded into a computer that enacts the computer to execute managing a plurality of interface widgets, the computer program is operable to the steps of: S401: receiving an executing sequence inputted by an user for executing a plurality of interface widgets; S402: checking the executing sequence of the interface widgets, and determining whether or not within a specific time interval for interface widgets there exceeds more than one; S403: randomly selecting one of the more-than-one interface widgets needed for execution, if there does.

Preferably, the widgets select a correlated programs or websites for being played by the computer.

Preferably, the computer program is further operable to the step of S405: if in S403, the duration for the interface widget selected to be played is oppositely proportional to the occupation in the entire executing sequence of the selected widget.

Preferably, the computer for running the computer program has widgets selected from the correlated contents of weather, stock, currency, sports and news.

The invention being thus aforesaid, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for managing one or more widgets predetermined in corresponding infotainment of a system, comprising:
selecting a needed widget via a user interface, and setting up an executing sequence of the widget of the needed interface widget;
calling the interface widget by the executing sequence set up via a kernel unit, and collecting at least an infotainment content from an infotainment service terminal; and
randomly or sequentially displaying any one of the widgets operated in the executing sequence in a media replay module to correspondingly display the collected infotainment content.

2. The method as recited in claim 1, wherein the media replay module is a liquid crystal display (LCD) display.

3. The method as recited in claim 1, wherein the user interface is a touch panel or a remote control.

4. The method as recited in claim 1, wherein the kernel unit is a processing module capable for both Internet connecting and media content processing.

5. The method as recited in claim 1, further comprising the step of: while the widget under execution exceeds the set-up executing sequence, stopping the widget program from displaying on the media replay module.

6. The method as recited in claim 1, wherein the widgets are previously stored in a storage medium of the system, and the storage medium is a memory.

7. A programmable personal infotainment system, which can randomly play one or plural widgets at a specific time interval according to user preferences, comprising:
a memory, for storing one or plural widgets and an execution sequence for the interface widgets according to user's preference;
a user interface, for assisting the user to input the execution sequence;
a liquid display, for displaying contents of the interface widgets; a random program selector, for searching the interface widget designated at the execution sequence within a specified time frame;
a processing unit, for accessing a specific content from a server according to the designated widget; and
a player, for playing the specific content according to the outcome selected by the random program selector.

8. The system as recited in claim 7, wherein the executing sequence further includes a program name and a program-predetermined playing schedule.

9. The system as recited in claim 7, further comprising a counter, for calculating the playing time of the playing program of the program executing sequence

10. The system as recited in claim 7, wherein the propagation scheme of the program's executing sequence is set up via a web page

11. The system as recited in claim 7, wherein the executing sequence of the program is an on-line TV program guideline

12. The system as recited in claim 7, wherein the random program selector selects a web site.

13. A computer-readable medium, for storing a computer program which is loaded into a computer that enacts the computer to execute managing a plurality of interface widgets, the computer program is operable to:
(a) receiving an executing sequence needed for a plurality of widgets;
(b) checking the executing sequence of the interface widgets, and determining whether or not within a specific time interval for the interface widgets there exceeds more than one; and
(c) randomly selecting one of the more-than-one interface widgets needed for execution, if there is.

14. The computer-readable medium as recited in claim 13, wherein the interface widgets selects a correlated program or a website for being played by the computer.

15. The computer-readable medium as recited in claim 13, wherein the computer program is further operable to step (d): if in the step (c), the interface widget selected to be play is executed excessively longer than a user specific duration, then another interface widget is randomly or selectively selected and then executed.
